# EUROPEAN PATENT APPLICATION

(11) **EP 3 412 144 A1**
(43) Date of publication of application: **12.12.2018**
(21) Application number: 17192211.5
(22) Date of filing: 20.09.2017
(51) Int. Cl.: A01K 5/01

(54) **FEEDING BOWL SECUREMENT APPARATUS**

(30) Priority: 05.06.2017 US 201715613490
(71) Applicant: Kumar, Sudhir, 131028 Sonipat, Haryana (IN); Kumar, Sumeet, 131028 Sonipat, Haryana (IN)
(72) Inventor: Kumar, Sudhir, 131028 Sonipat, Haryana (IN); Kumar, Sumeet, 131028 Sonipat, Haryana (IN)
(74) Representative: Beckord & Niedlich Patentanwälte PartG mbB

(57) **Abstract**

The invention describes a molded elastomeric feeding bowl securement apparatus (10) comprising: a suction cup base portion (20); a top portion (30) disposed integrated atop the suction cup base portion (20), said top portion (30) devised to sealably engage around at least a portion of an existing feeding bowl (100); and a protuberant tab portion (22) disposed exteriorly projected upon the suction cup base portion (20); wherein the existing feeding bowl (100) is securable into the top portion (30) and maintainable elevated above an underlying surface to which the suction cup base portion (20) is sealably set whereby disengagement of the suction cup base portion (20) is readily enabled by manual action effected at the protuberant tab portion (22)..

## Description

### BACKGROUND OF THE INVENTION

Various types of feeding apparatuses for pets are known in the prior art. Most enable presentation of food to a pet in a container that remains unanchored and is therefore susceptible to displacement and tipping while pets feed. Housings usable to secure pet feeding bowls and dishes are typically unyielding, rigid structures that make use of openings sized to accommodate the pet feeding bowl or dish whereby the bowl or dish is anchored in place by position interior to an opening or structure but remains susceptible to displacement and spillage.

What is needed is a yielding, impervious, polymeric and elastomeric feeding bowl securement apparatus that is pliable and lightweight and adapted for position upon a floor or other surface whereby the pet feeding bowl or dish is secured in place and yet readily repositioned, as desired.

The present feeding bowl securement apparatus, therefore, provides a one-piece molded object capable of securing a feeding bowl to an underlying surface while enabling ready removal and repositioning, as preferred.

### FIELD OF THE INVENTION

The present invention relates to a one-piece, molded, polymeric and elastomeric feeding bowl securement apparatus that includes a suction cup base portion, capable of securement to an underlying surface, and a top portion, securable around at least the bottom portion of a feeding bowl, whereby the feeding bowl is securable in position atop the suction cup base portion and thereby securable to an underlying surface when the suction cup base portion is set. Elastomeric rebound of the suction cup base portion subsequent setting to an underlying surface succeeds in creating and maintaining a partial vacuum whereby the feeding bowl securement apparatus is securable in a desired position upon an underlying surface such as, for example, a kitchen or other floor.

A protuberant tab portion is included, disposed exteriorly projected upon the suction cup base portion, whereby manual tactility is enhanced and a user is enabled to separate the suction cup base portion from the underlying surface to which it is set by applying upward force at the protuberant tab portion. The resulting displacement of the suction cup base portion breaks the partial vacuum formed thereunder when the suction cup base portion was set, whereby the feeding bowl securement apparatus is thence readily removable.

### SUMMARY OF THE INVENTION

The general purpose of the feeding bowl securement apparatus, described subsequently in greater detail, is to provide a feeding bowl securement apparatus which is usable to secure a pet feeding bowl to an underlying surface and prevent tipping, whereby a pet is enabled to feed without displacing the bowl during the act of feeding.

The present feeding bowl securement apparatus, therefore, is a molded, one-piece, polymeric, elastomeric apparatus that employs a suction cup base portion, to effect sealable engagement against an underlying surface, and a top portion, devised to maintain position of an existing feeding bowl disposed therein. In the preferred embodiment disclosed herein, the feeding bowl securement apparatus is made of silicone. Additional materials comprising the apparatus are contemplated, such as thermo plasticized elastomer ("TPE"), rubber, latex and thermo plasticized rubber ("TPR").

The present feeding bowl securement apparatus, therefore, includes a suction cup base portion devised for sealable contact upon an underlying surface to which the suction cup base portion is settable. Set of the suction cup base portion is effected by depression of the suction cup base portion, as typical of suction cups known in the art, whereby the elastomeric rebound of the suction cup base portion creates and maintains a partial vacuum between the suction cup base portion and the underlying surface. Removal of the suction cup base portion is effective when the partial vacuum thereunder is broken.

A protuberant tab portion is disposed upwardly projected exteriorly upon the suction cup base portion. The protuberant tab portion provides a point of contact for manual grasping by a user, whereby breaking of the suction cup base portion's seal to an underlying surface is facilitated. A user may, therefore, readily disengage the suction cup base portion from an underlying surface by manual action effected by pulling at the protuberant tab portion to separate the suction cup base portion from the underlying surface and thus break the partial vacuum maintained there under.

The top portion, devised to engage against an existing feeding bowl, is integrated upon the suction cup base portion and disposed thereatop. In one embodiment of the present feeding bowl securement apparatus disclosed herein, the top portion is a bowl-shaped concavity devised for fixed engagement against the rounded bottom of an existing feeding bowl. In this embodiment, therefore, the top portion is affixed to the rounded bottom of the existing feeding bowl and supports the bowl atop the suction cup base portion to maintain the feeding bowl in position during the act of feeding by a pet. The bowl is maintained in position, fixed and seated to the top portion.

In another embodiment disclosed herein, the top portion of the present feeding bowl securement apparatus is devised to enclose an existing feeding bowl thereabouts, whereby a rim of the feeding bowl is accommodated atop an upper rim of an inverted frustoconical wall section and engaged thereat by overlapping action of an overhanging portion of an overlapping lip portion disposed about the upper rim. In this embodiment, the top portion contacts the exterior of the feeding bowl entirely, from the bottom of the existing feeding bowl to the rim of the existing feeding bowl. The existing feeding bowl is thus entirely encased by the top portion.

Removal of the existing feeding bowl from the top portion may be effected by manual action at each of a plurality of cutout portions rendered in the wall section. In an example embodiment illustrated herein, each of the cutout portions is rendered in a shape reminiscent of a dog's bone. A user may therefore grip at each cutout portion, as case may be, and effect separation of the top portion from contact with the existing feeding bowl whereby removal of the feeding bowl from the top portion is more readily facilitated.

In a preferred embodiment, the inventive molded elastomeric feeding bowl securement apparatus comprises: a suction cup base portion; a protuberant tab portion disposed exteriorly projected upon the suction cup base portion; a top portion disposed integrated atop the suction cup base portion, said top portion devised to sealably engage around an existing feeding bowl, said top portion comprising: an inverted frustoconical wall section disposed upwardly atop the suction cup base portion; an upper rim disposed circumferentially delimiting the inverted frustoconical wall section; an overlapping lip portion disposed around the upper rim, said overlapping lip portion having an overhanging portion devised to engage around and accommodate therein a rim disposed circumferentially upon the existing bowl; and a plurality of cutout portions assistive of a user when manually removing the existing bowl from within the inverted frustoconical wall section; wherein the existing feeding bowl is securable into the top portion and maintainable elevated above an underlying surface to which the suction cup base portion is sealably set, whereby disengagement of the suction cup base portion is readily enabled by manual action effected at the protuberant tab portion.

Thus has been broadly outlined the more important features of the present feeding bowl securement apparatus so that the detailed description thereof that follows may be better understood and in order that the present contribution to the art may be better appreciated.

Objects of the present feeding bowl securement apparatus, along with various novel features that characterize the invention are particularly pointed out in the claims forming a part of this disclosure. For better understanding of the feeding bowl securement apparatus, its operating advantages and specific objects attained by its uses, refer to the accompanying drawings and description.

### BRIEF DESCRIPTION OF THE DRAWINGS

Figure 1 is an elevation view of an example embodiment.
Figure 2 is a bottom elevation view of an example embodiment affixed to a pet feeding bowl.
Figure 3 is an elevation view of an example embodiment adjacent a pet feeding bowl.
Figure 4 is an example embodiment with the pet feeding bowl therein.
Figure 5 is a medial cross-section of an example embodiment.
Figure 6 is an exploded view of an example embodiment.

### DETAILED DESCRIPTION OF THE DRAWINGS

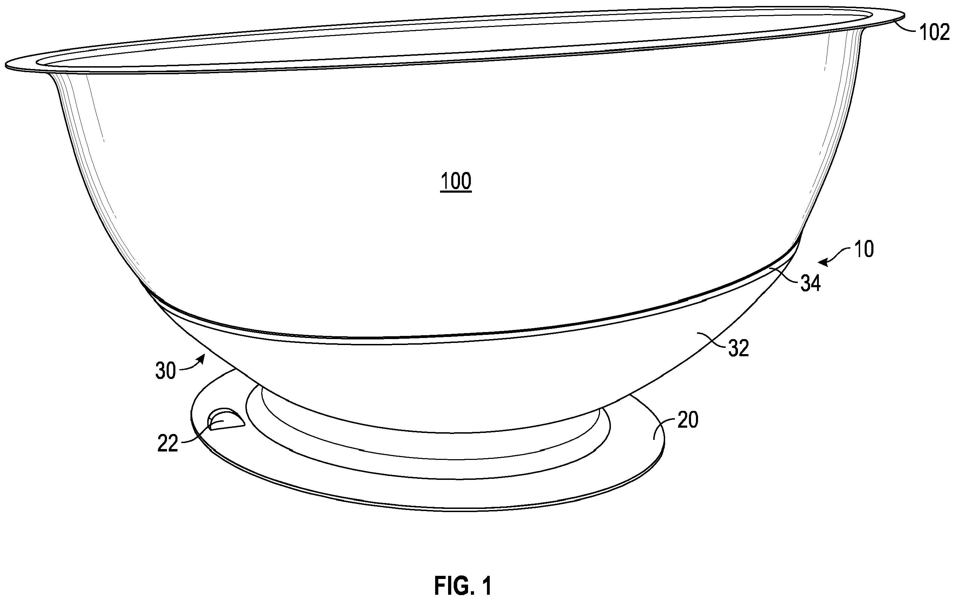

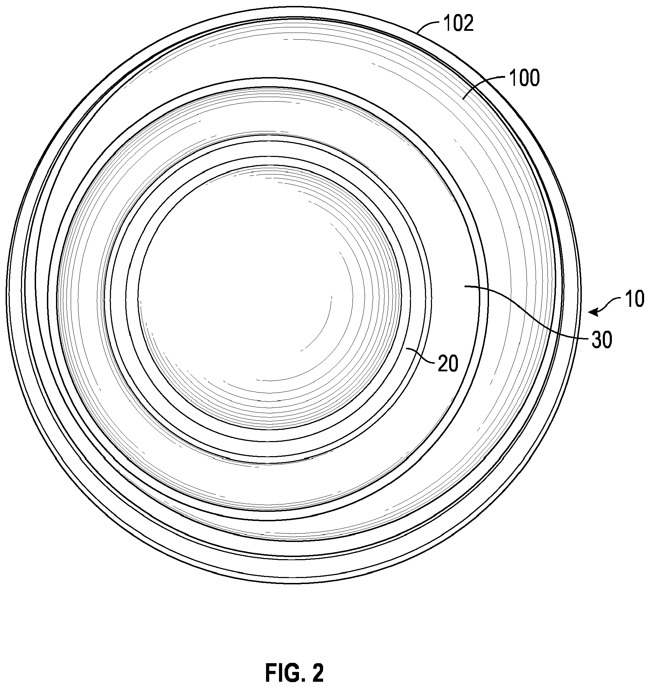

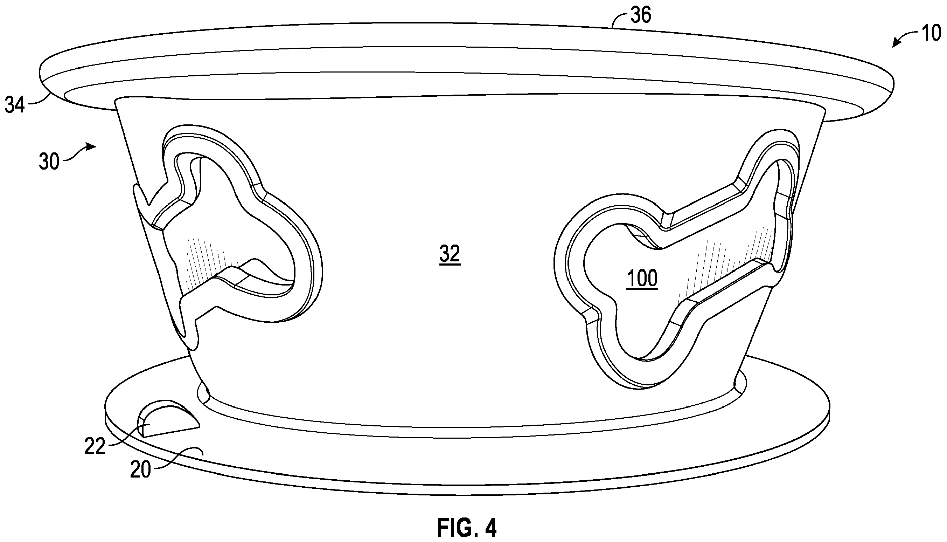

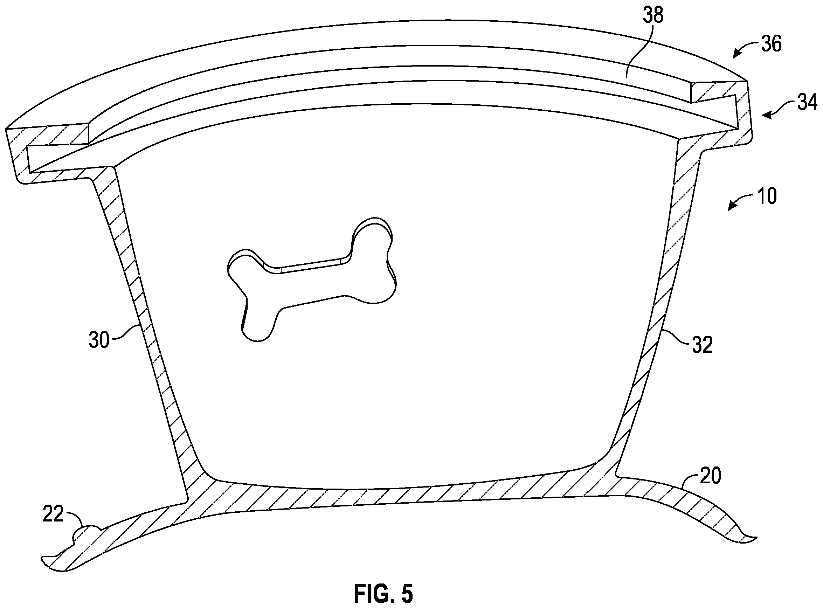

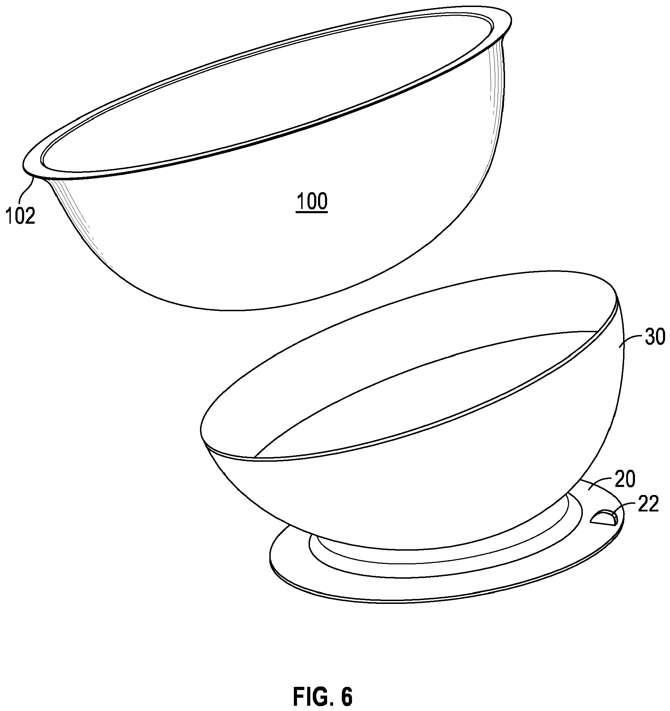

With reference now to the drawings, and in particular FIGS. 1 through 6 thereof, example of the instant feeding bowl securement apparatus employing the principles and concepts of the present feeding bowl securement apparatus and generally designated by the reference number 10 will be described.

Referring to FIGS. 1 through 6 example embodiments of the present feeding bowl securement apparatus 10 is illustrated.

The present feeding bowl securement apparatus 10 has been devised to enable securement of a pet feeding bowl 100 to the floor and thereby to prevent unwanted lateral displacement or tipping of the bowl 100 during feeding of a pet. The present feeding bowl securement apparatus 10 is molded of polymer as a single-piece object. In the preferred embodiment set forth herein, the feeding bowl securement apparatus 10 is molded of silicone. Additional elastomeric materials are contemplated as part of this disclosure, including, for example, thermo plasticized elastomer ("TPE"), rubber, latex and thermo plasticized rubber("TPR").

The present feeding bowl securement apparatus 10 employs a suction cup base portion 20 to sealably engage an underlying surface and thus maintain position until the partial vacuum created by action of the suction cup base portion 20 is broken by manual action effected at a protuberant tab portion 22 disposed upwardly projected exteriorly upon the suction cup base portion 20. Feeding pets, therefore, enables grounding of the pet feeding bowl 100 and securement within a top portion 30 as will be described subsequently.

The present feeding bowl securement apparatus 10, therefore, includes a suction cup base portion 20 disposed to sealably contact a floor or ground surface. A protuberant tab portion 22 is disposed exteriorly projected upon the suction cup base portion 20 whereby a user may break contact of the suction cup base portion 20, to effect displacement of atmosphere under the suction cup base portion 20, by manual action at the protuberant tab portion 22.

A top portion 30 is disposed integrated atop the suction cup base portion 20. The top portion 30 is devised to sealably engage around an existing feeding bowl 100. In an example embodiment of the present feeding bowl securement apparatus 10, the top portion 30 is a bowl-shaped concavity devised for fixed engagement flush against the rounded bottom of an existing feeding bowl 100 as shown in FIGS. 1, 2 and 6. In this embodiment, the top portion 30 is not removable from contact with the feeding bowl 100.

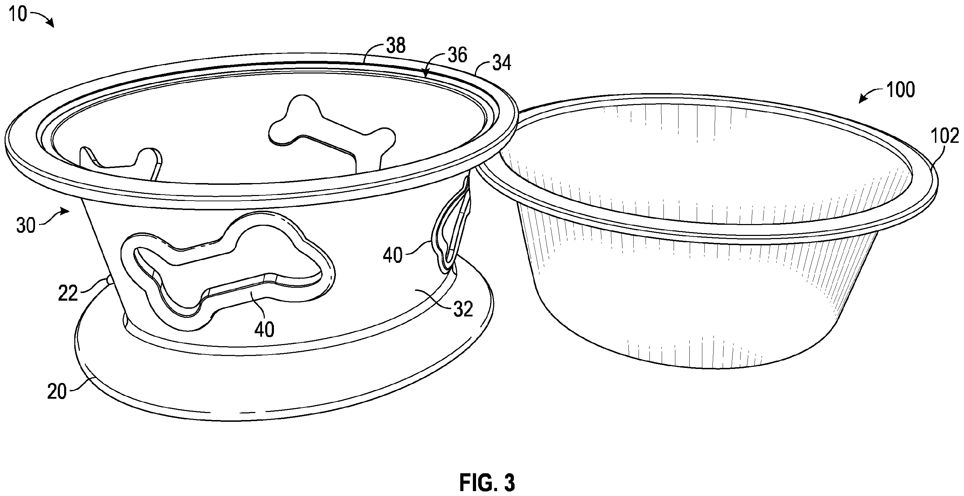

In the example embodiment shown in FIGS. 3, 4, and 5, the top portion 30 includes an inverted frustoconical wall section 32 disposed flared upwardly atop the suction cup base portion 20. An upper rim 34 is disposed circumferentially delimiting the inverted frustoconical wall section 32 at an uppermost extremity thereof, and an overlapping lip portion 36 is disposed around the upper rim 34, said overlapping lip portion 36 having an overhanging portion 38 devised to engage around and accommodate therein a rim 102 disposed circumferentially upon the existing bowl 100.

The existing bowl 100 having a rim 102 thereabouts is fittable into the frustoconical wall section 32 whereby the rim 102 of the bowl 100 seats onto the upper rim 34 of the wall section 32 and is thereat overlapped and accommodated by the overhanging portion 38 of the overlapping lip portion 36.

To assist in removal of the feeding bowl 100 from engagement within the top portion 30, a plurality of cutout portions 40 may be disposed within the inverted frustoconical wall section 32. Each of the plurality of cutout portions 40 enables user contact with the feeding bowl 100 therethrough. Each of the plurality of cutout portions 40 enables a user to assist in separating the bowl 100 from the wall section 32 and effect removal thereby.

The existing feeding bowl 100 is thus securable into the top portion 30 and maintainable elevated above an underlying surface to which the suction cup base portion 20 is sealably set, whereby disengagement of the suction cup base portion 20 is readily enabled by manual action effected at the protuberant tab portion 22.

## Claims

1. A molded elastomeric feeding bowl securement apparatus (10) comprising:
a suction cup base portion (20);
a top portion (30) disposed integrated atop the suction cup base portion (20), said top portion (30) devised to sealably engage around at least a portion of an existing feeding bowl (100); and
a protuberant tab portion (22) disposed exteriorly projected upon the suction cup base portion (20);
wherein the existing feeding bowl (100) is securable into the top portion (30) and maintainable elevated above an underlying surface to which the suction cup base portion (20) is sealably set whereby disengagement of the suction cup base portion (20) is readily enabled by manual action effected at the protuberant tab portion (22).

2. The molded elastomeric feeding bowl securement apparatus of claim 1 wherein the top portion (30) further comprises a concavity devised for fixed engagement to a rounded bottom of the existing bowl.

3. The molded elastomeric feeding bowl securement apparatus of claim 1 or claim 2, wherein the top portion (30) further comprises an inverted frustoconical wall section (32) disposed upwardly atop the suction cup base portion (20).

4. The molded elastomeric feeding bowl securement apparatus of any of the preceding claims, wherein the top portion (30) further comprises an upper rim (34) disposed circumferentially delimiting the inverted frustoconical wall section (32).

5. The molded elastomeric feeding bowl securement apparatus of any of the preceding claims, wherein the top portion (30) further comprises an overlapping lip portion (36) disposed around the upper rim (34), said overlapping lip portion (36) having an overhanging portion (38) devised to engage around and accommodate therein a rim (102) disposed circumferentially upon the existing bowl (100).

6. The molded elastomeric feeding bowl securement apparatus of any of claims 3 to 5, wherein the inverted frustoconical wall section (32) includes cutout portions (40) assistive of a user when manually removing the existing bowl (100) from within the inverted frustoconical wall section (32).

7. The molded elastomeric feeding bowl securement apparatus of claim 6 wherein the cutout portions (40) are devised to resemble silhouettes of dog bones.

8. The molded elastomeric feeding bowl securement apparatus of any of the preceding claims, wherein the feeding bowl securement apparatus (10) is made of a material selected from the group consisting of: silicone, thermo plasticized elastomer, rubber, latex and thermo plasticized rubber.
